# EUROPEAN PATENT SPECIFICATION

(11) **EP 2 200 456 B1**
(45) Date of publication and mention of the grant of the patent: **30.03.2011**
(21) Application number: 08804302.1
(22) Date of filing: 17.09.2008
(51) Int. Cl.: A23L 2/02, A23L 2/42, A23L 2/44, A23L 2/66, A23L 3/3526

(54) **PRESERVATION OF ACIDIC BEVERAGES**
KONSERVIERUNG VON SÄUREHALTIGEN GETRÄNKEN
CONSERVATION DE BOISSONS ACIDES

(30) Priority: 17.09.2007 EP 07116554
(43) Date of publication of application: 30.06.2010
(73) Proprietor: PURAC Biochem BV, 4206 AC Gorinchem (NL)
(72) Inventor: KREMER, Diderik Reinder, NL-9722 WG Groningen (NL); RAMIREZ, Aldana Mariel, NL-6702 AG Wageningen (NL); OTTO, Roel, NL-4201 BC Gorinchem (NL); BONTENBAL, Elize Willem, NL-6701 CE Wageningen (NL)
(74) Representative: Hesselink, Dinah Elisabeth
(86) International application number: PCT/EP2008/062348
(87) International publication number: WO 2009/037274

(56) References cited:
- EP-A- 0 591 051
- EP-A- 1 832 182
- WO-A-2006/044906
- FR-A- 2 634 627
- US-A1- 2001 033 884
- US-B1- 6 200 619

## Description

The present invention relates to a method for preserving acidic beverages against the growth and presence of microorganisms such as yeasts, fungi and against bacteria.

Acidic beverages are beverages having a pH value of from 1 to about 4.8. They may be acidic of nature or may be acidified by addition of acidulants. Examples of acidic beverages include hot packaged-type of drinks such as for example various types of fruit and/or vegetable juice-containing drinks and cold fill packaged-type of drinks such as e.g. carbonated soft drinks. Especially the fruit and/or vegetable-based drinks are prone to the development of microbial growth of fungi, yeasts and bacteria. However, acidic beverages are difficult to preserve as the possibilities in using preservative agents are limited. Only those agents are suited that can resist such an acidic environment in terms of
1. that they do not loose in antimicrobial activity and/or
2. that they and the drinks in which they are applied stay chemically stable (e.g. no denaturing of protein or formation of precipitate)
3. and that they do not degrade leading to the formation of byproducts with a negative impact on taste, color, odor and/or appearance of the product.
This makes for example many proteins, amino-acids and enzymes unsuited for use as preservative agents in acidic beverages. As a consequence, in most cases food-grade acids and/or their salts are therefore used as preservative agents in said acidic beverages.
An example is the use of benzoic acid and/or the benzoate salts hereof. Sodium benzoate is used preferably as one of the principal anti-microbial preservatives for foods and beverages. However, the use of benzoic acid and/or the salts is limited and usually not exceeding 0.1 % (for the sodium salt) due to the poisonous character of these components. In combination with ascorbic acid, sodium and potassium benzoate can under certain conditions even lead to detectable levels of benzene.
Sorbic acid an/or the sorbate salts are also widely-applied preservative agents for acidic food and drink products. These components are however also limited in their use: when it comes to preserving food products against molds developed by Penicillum species for example, sorbic acid is degraded by said Penicillum species to produce 1,3-pentadiene which has a kerosene off-odor. Accepted usage levels for potassium sorbate can be in the range of from about 200 to about 3000 ppm. Typically, potassium sorbate is included in beverages at levels far above the effective minimum to ensure antimicrobial activity. However, at the higher end of this accepted usage range, potassium sorbate can contribute off-flavors to juice beverages.
Sorbates and benzoates are preservation agents that are typically applied in beverages that undergo cold-fill packaging methods. They are further often used in combination with phosphates.
A third example of an acidic preservative agent are the propionic acid and/or propionates which are primarily known for their antimicrobial effect against molds formed by fungi and not against yeasts. Further, propionic acid and most of the propionate salts have the disadvantage that they are limited in their use due to their very distinct and unpleasant odor and taste.

The present invention provides an improved means for preserving low pH-type of drink products. The present invention has a wide spectrum of antimicrobial activity and can reduce or even prevent the occurrence of fungi and yeasts and further has antibacterial activity against gram-positive and gram-negative bacteria. Further, the present invention provides a means for preserving acidic drink products while maintaining an acceptable quality with respect to both the safety for human consumption and in the organoleptic properties including taste, color and/or odor.
Further, the invention provides a solution for drinks in which the regular preserving agents, such as those mentioned earlier, cause problems such as for example due to the appearance of a precipitate or a haze. And secondly, by application of the present invention, the use of normally applied preserving agents can be reduced to such extent that said preserving agents can be used without running into their shortcomings while profiting from their benefits.
Furthermore, the present invention makes the use of a heat treatment for inactivation of food spoilage microorganisms such as yeasts, fungi and certain bacteria superfluous and thus optional. Thus, simple and less expensive cold-fill or cold-packaging methods can be used. And in beverages that still require a heat-treatment, application of the present invention will prevent the growth of microbial spores. Heat-treated beverages that contain the usually applied preservation agents, such as for example benzoates and sorbates, still face this problem as the spore-formation of some organisms may be prevented but not the growth of spores that are already present in the drink products.

Hereto, the present invention is directed to a method for preserving acidic beverages having a pH value of from 1 to 4.8 against fungi, yeasts and bacteria wherein said preservation method comprises the application of a composition comprising polylysine and/or a salt hereof and at least one of
- fatty acid ester of hydroxycarboxylic acid and/or a salt hereof, or of
- fatty acid ester of glycerol.
The preservation method according the present invention includes the killing, prevention and/or inhibition of the growth and/or presence of micro-organisms that are already present or are introduced in the drink products by the other ingredients or by environmental sources during for example the preparation, handling and/or storage of the drink products.

Polylysine is known to have antimicrobial effect against fungi, yeasts and bacteria. Most prior art, as described in various papers, is directed to polylysine and in particular ε-polylysine having antimicrobial activity at pH-values of from 5 tot 9 (Hiraki, J. Antibact. Antifungal Agents, vol. 23 no. 6: 349-354 (1995) and Hiraki, Fine chemicals, 29: 18-25 2000). Further, most prior art such as US2001/033884 by Yamada et al. and FR2634627 by Masahiro et al. is directed to solid food products and not to drink products. As the artisan very well knows, drink products have very different standards and requirements with respect to for example appearance, taste, odor and flavor. Many preservative agents that are commonly applied to food products cannot be applied to drink products as they cause problems such as for example the occurrence of a haze or precipitate in the drink product. Within the group of drink products, there is a further significant variety including for example dairy drinks, juice-based beverages, pH neutral drinks, acidic and slightly acidic beverages, carbonated or non-carbonated drinks etceteras. All these drinks have their own standards and requirements.
EP1832182 by Zheng et al. describes the application of ε-polylysine in combination with a heat treatment in acidic fruit juice-containing beverages. Production of shelf-stable fruit juice-containing beverages always requires this heat treatment, most often ultra high temperature treatment (UHT), in order to inactivate spores of spore-forming bacteria. EP1832182 discloses that application of ε-polylysine is possible in this kind of beverages but its antimicrobial activity is far from sufficient for providing an acceptable shelf-life. The application of ε-polylysine is not sufficient for inactivating bacterial spores, let alone for preventing the entire presence of these spores in the first place, and accordingly an additional treatment in the form of e.g. UHT or a pasteurization step is still required in the production of these acidic fruit-juice-containing beverages.

It has now been found that polylysine and/or a salt hereof can surprisingly be very well applied in acidic beverages having pH values of from 1 to 4.8 and preferably from 2 to 4.6 in combination with a second preserving agent selected from either fatty acid ester of hydroxycarboxylic acid (or the salt hereof) or fatty acid ester of glycerol or a combination hereof.
The combination of polylysine with a fatty acid ester of either hydroxycarboxylic acid or of glycerol surprisingly generates sufficient antimicrobial activity for reducing, inhibiting or preventing the presence and/or activity of yeasts, fungi and bacteria. With this combination a very efficient antimicrobial composition and very suited for application in acidic beverages is obtained as it does not easily precipitate in acidic beverages or affect the appearance and organoleptic properties of such beverages.
The antimicrobial activity obtained is not the simple sum of the contribution in antimicrobial activity of both polylysine and the fatty acid ester but is significantly greater than the sum as the fatty acid ester was found to work in synergy with the polylysine. This is unexpected since such fatty acid esters of hydroxycarboxylic acids (e.g. lactylates) and also glycerides are known for their emulsifying effect and certainly not for their antimicrobial activity as they lack sufficient antimicrobial activity on their own.
As a result of the synergistic effect both preserving agents can be reduced in their amount needed to achieve a satisfying antimicrobial activity for inhibiting and/or prevention of the presence and/or activity of yeasts, fungi and bacteria. Further, additional treatments such as heat treatments become superfluous or optional and, if applied, may be applied at significant lower temperatures.
Furthermore, the synergy of the polylysine - fatty acid blend as used in the method according to the present invention provides the possibility of creating a preservative blend or cocktail in which, as further additional preserving agents, compounds may be used that are very suited for application in acidic to slightly acidic beverages for various reasons but which are normally limited in their use herein due to reasons as mentioned earlier. For example, the acidic preserving agents such as sorbates and benzoates may now be used in significant less amounts at which they will not form precipitates or byproducts nor will have negative impact on taste and odor of the acidic beverages.

Polylysine may be used in the form of α-polylysine and in the form of ε-polylysine or in mixture hereof. ε-Polylysine is preferred as it has a higher antimicrobial activity and thus lesser amounts can be used in the applications. ε-Polylysine is a homopolymer containing 25 to 35 L-lysine residues. The systematic name of ε-polylysine is poly(imino(2-amino-1-oxo-1,6-hexanediyl)). The empirical formula for the typical ε-polylysine homopolymer is C180H362N60O31 with a molecular weight of approximately 4700 (corresponding to about 30 L-lysine residues).

Polylysine may also be used in the present invention in the form of one or more salts of polylysine. Examples hereof are the salts of inorganic acids such as hydrochloric acid, sulfuric acid, phosphoric acid etceteras or the salts of an organic acid such as lactic acid, acetic acid, propionic acid, fumaric acid, malic acid, citric acid etceteras. Although there is no substantial difference in antibacterial effect, polylysine is sometimes preferably used in the free form because of limited solubility of the polylysine in salt form.

The fatty acid ester to be used in combination with polylysine or a salt hereof according to the method of the present invention includes
- fatty acid ester of hydroxy carboxylic acids and/or salts of these hydroxy carboxylic acids and
- fatty acid ester of glycerol also referred to as glyceride.

Said hydroxy carboxlic acid may comprise one monomer of hydroxy carboxylic acid or several monomers of hydroxy carboxylic acid linked to each other by polymerized bonds; an example of the first is a fatty acid ester of lactic acid. An example of the latter containing several polymerized monomers is the group of the well-known lactylates. These lactylates are very well known for their emulsifying properties and are used as emulsifiers in the production of various food and drink products. In these lactylates, including both mono- and di-lactylates, the hydroxy carboxylic acid comprises several monomers of lactic acid. The monomer of said hydroxy carboxylic acid may in general comprise 1 to 6 carbon atoms such as for example the monomer of lactic acid as mentioned above, but the monomer may also comprise malic acid, citric acid, gluconic or tartaric acid. Further, the hydroxy carboxylic acid may also be in the salt or ester form. These salts and/or esters of said hydroxy carboxylic acid are also very suitable to be used in the method according to the present invention. An example of lactylate salt derivative which works very efficient are the sodium, potassium and calcium salts of mono- and/or di-lactylate esters of octanoic acid (referred to as C8), or decanoic acid (C10), or dodecanoic acid (C12) or tetradecanoic acid (C14), or palmitic acid (C16), or of oleic acid (C18:1).

The polylysine may also be used in the method according to the present invention in combination with fatty acid ester of glycerol also referred to as glyceride. The glyceride may comprise a monoester, a di-ester or a tri-ester of glycerol or mixtures hereof. The way in which these esters are produced often lead to mixture of the various mono-, di and/or tri-esters possible as commonly known. The esters can be separated from these mixtures by different techniques known by the person skilled in the art. Thus, when reference is made to mono-esters, these mono-esters of glycerol comprise the pure components as well as mixtures which mainly comprise mono-esters but also comprise di- and tri-esters as further components of said mixture.
Very good results were obtained with application of a combination of polylysine with the mono- and di-esters of glycerol. High synergy and thus high antibacterial activities are observed with combinations of polylysine and fatty acid ester of glycerol and fatty acids comprising saturated fatty acid such as for example and not limited to propionic (C3), hexanoic (C6) acid, octanoic (C8) acid, decanoic (C10) acid, dodecanoic (C12) acid, tetradecanoic (C14) acid, hexadecanoic (C16) acid, octadecanoic (C18) acid, and mixtures hereof.
When referral is made in this application to for example C8-glyceride or C10-glyceride, then meant are the fatty acid ester of glycerol and respectively octanoic acid and decanoic acid.

The third or further additional preserving agent is preferably one or more agents selected from benzoic acid and benzoate salts, sorbic acid and sorbate salts, lactic acid and lactate salts, gluconic acid and gluconate salts, citric acid and citrate salts, acetic acid and acetate salts, malic acid and malate salts, fumaric acid and salts hereof, tartaric acid and salts hereof, ascorbic acid and ascorbates, EDTA, phosphate and phosphate-based salts, phytic acid and phytates, propionic acid and/or propionates, hexanoic acid and/or hexanoates, esters of propionic and/or hexanoic acids with glycerol, lactic acid, arginine, octanoic acid and/or octanoate salts and/or esters made hereof with glycerol, lactic acid, arginine and decanoic acid and decanoate salts and/or esters made hereof with glycerol, lactic acid or arginine, cinnamic acid and/or salts hereof.
The combinations of above-mentioned components with polylysine and fatty acid ester of hydroxycarboxylic acid and/or of glycerol can be very well applied in acidic to slightly acidic beverages and demonstrated remarkably high antimicrobial activity.

Further, when in particular sorbic acid, cinnamic acid, lactic acid, acetic acid, citric.acid, propionic acid or any combination hereof, including the salts of these acids, is added to the composition comprising polylysine and glyceride or to a composition comprising polylysine and lactylate optionally in combination with glyceride, remarkably nice results are obtained with respect to the preserving effect and conservation of the desired organoleptic properties of the drink products in which it is applied. Above-mentioned specific acids provide beverages with a very specific organoleptic profile in terms of in particular taste and odor.

The polylysine may be added directly to the drink products but it may also be introduced together with other ingredients in the form of a cocktail to the drink products. A composition suited for the manufacture of drink products comprises for example
- from 0.0001 wt% to up to 50 wt%, more preferably from 0.1 wt% to 45 wt%, and most preferably from 1 to 35 wt% of polylysine and/or a salt hereof
   and as second preservative either
- from 0.0001 wt% to up to 45wt.% and more preferably up to 40 wt%, and most preferably up to 35 wt% of glyceride
   or
- from 0.0001 wt% to up to 45 wt% and more preferably from 5 to 35 wt% of lactylate
   and further
- from 0 to 45 wt% and more preferably from 0 to 30 wt% of organic acid or a salt or ester of mixture hereof.
If cinnamic acid and/or sorbic acid is used, these components and/or salts hereof may be applied in a composition comprising from 0 to 45 wt% and more preferably from 0 to 30 wt% of these components.

The composition may be available in its solid or liquid form. If the composition is in liquid form, it generally is in the form of an aqueous composition, which may be a solution or dispersion and may comprise a carrier. Among various well-known carriers, it was found that polyethylene glycol and/or lactate function very well as carrier. The carrier may be present in concentrations of about 50 to 98 wt%. Further, various emulsifiers known to the person skilled in the art may be added. Preferably emulsifiers such as polysorbates (e.g. polysorbate 60 or 80) and lecithine are applied in concentrations of for example 0.1 to 25%, more preferably 1-10% and most preferably 2 to 4% based on 100% fatty acid derivative, such as glyceride and/or lactylate.
If the composition is in solid form, it will generally be in the form of a powder comprising particles of the relevant components. Use may be made of carriers. Silica and/or maltodextrine were found to be very suitable carriers and may be present in concentrations up to 50 to 98 wt%.

Polylysine will normally be present in a drink product in an amount of up to 1 % by weight of the product, preferably from 0.0001 % to 1 % or from 0.0001 % to 0.1 %, more preferably from 0.0001 % to 0.01 %, most preferably from 0.0001 % to 0.001 %.

Lactylate will normally be present in said product in an amount of up to 1 % by weight of the product, preferably from 0.0001 % to 1 %, or even from 0.0001 % to 0.1 % and most preferably from 0.0001 % to 0.01 %.
Glyceride will normally be present in a drink product in an amount of up to 5 % by weight of the product, preferably from 0.0001 % to 5 %, more preferably from 0.0001 % to 2 %, most preferably from 0.0001 % to 1 %.
Organic acids or their salts such as for example lactic acid, fumaric acid, succinic acid, tartaric acid, ascorbic acid, glycolic acid, benzoic acid, acetic acid, citric acid, propionic acid, hexanoic, octanoic acid, malic acid and adipic may be present in a food or drink product in an amount of up to 10 % by weight of the product, preferably from 0.0001 % to 10 %, preferably from 0.0001 % to 5 %. The same concentration ranges apply to the presence of cinnamic and/or sorbic acid in end products.

The method according to the present invention is especially effective in killing, inhibiting and/or preventing the growth or presence of food-spoilage yeasts such as preferably but not limited to e.g. yeasts of the family of Candida (e.g. *Candida albicans* or *fermentati* or *parapsilosis* or *tropicalis*), Debaryomyces (e.g. *Debaryomyces hansenii*), Dekkera (e.g. *Dekkera bruxellensis*), Hanseniaspora (e.g. *Hanseniaspora uvarum*), Issatchenkia (e.g. *Issatchenkia orientalis*), Kluyveromyces (e.g. *Kluyveromyces marxianus*), Metschnokowia (e.g. *Metschnokowia pulcherrima*), Pichia (e.g. *Pichia anomala*), Rhodotorula (e.g. *Rhodotorula glutinis* or *mucilaginosa*), Saccharomyces (e.g. *Saccharomyces cerevisiae*), Schizosaccharomyces (e.g. *Schizosaccharomyces pombe*)*,* Torulospora (e.g. *Torulospora delbruecki*), Yarrowia (e.g. *Yarrowia lipolytica*) and of the family of Zygosaccharomyces (e.g. *Zygosaccharomyces bailii* or *rouxii*).
Also the presence and/or activity of bacteria can be efficiently reduced and/or prevented in acidic drinks by using polylysine combined with fatty acid ester of glycerol or of hydroxycarboxylic acid according to the present invention. Especially bacteria such as for example and not limited to bacteria of the family of Alicyclobacillus, Acetobacter, Gluconobacter, Gluconoacetobacter, Lactobacillus and other related bacteria families have found to be sensitive in acidic environments for the presence of the components of the present invention.
The combinations of polylysine with fatty acid ester of glycerol and/or of hydrxoycarboxylic acid according to the method of the present invention have also demonstrated to be effective in acidic drinks against the presence and/or growth of fungi such as for example fungi of the family of Fusarium (e.g. *Fusarium oxysporum*), Mucor (e.g. *Mucor plumbeus*)*,* Byssochlamys (e.g. *Byssochlamys fulva*), Neosartorya (e.g. *Neosartorya spinosa*), Talaromyces (e.g. *Talaromyces trachyspermus* or *macrosporus*), Geotrichum (e.g. *Geotrichum candidum*), Paecilomyces (e.g. *Paecilomyces variotii*), Penicillium (e.g. *Penicillium roqueforti* or *chrysogenum*), Aspergillus (e.g. *Aspergillus flavus*), Botrytis (e.g. *Botrytis cinerea*), Rhizopus (e.g. *Rhizopus stolonifer*), Cladosporium (e.g. *Cladosporium herbarum*) and Eurotium (e.g. *Eurotium herbariorum*).

The present invention was found to be very suitable for application in both hot-fill packaged or cold-fill packaged type of drinks. Hot-filling and cold-filling packing are very-well known process techniques. The person skilled in the art knows what specific conditions are used in these techniques. Cold-filling packing most often is applied at temperatures below 50 degrees Celsius and preferably at ambient temperatures. As explained earlier, the present invention makes heat treatment superfluous or optional and if heat treatment is required, it may be applied at much more favorable lower temperatures.
The present invention is very suited for cold-fill type of beverages, meaning beverages that may be packed by applying a cold-fill packing method.
Drink products such as fruit- or vegetable-including juices can be very well preserved with the method according to the present invention. The juices may be carbonated or not. Further, the juices may be in concentrated form or present as ready-to-drink juices and they include natural and processed/reformulated juices.
The method according to the present invention has also shown to be very effective for the preservation of carbonated soft drinks.

The following non-limiting experiments will further illustrate the present invention.

### Experiments

### Experiment 1:

The efficacy of mixtures of sorbic- or cinnamic acid and ε-polylysine with some fatty acid derivatives were tested at pH 3.5 in GPY-broth (Glucose Pepton Yeast powder) against a collection of food spoilage yeasts. The concentration of ε-polylysine and certain medium chain fatty acid derivatives could be greatly reduced by combinations of these two compounds if either sorbic- or cinnamic acid was present.

### Cultures and culture conditions.

The cultures that were studied are listed in Table 1. Cultures were grown in GPY-broth that contained per liter demineralised-water: 40 g glucose, 5 g peptone and 5 g yeast extract, the pH of the medium to 3.5 with 2 N HCl. Cultures were grown in screw-capped tubes for at least 48 hours at 25 oC. Pichia membranifaciens MUCL 27794, CBS 8427and CBS 5567, Rhodotorula glutinis CBS 2367, Rhodotorula mucilaginosa CBS 8054 and CBS 2401 and Zygosaccharomyces bailii MUCL 27812 were cultured in shake flasks

**Table 1: Tested CBS and MUCL-cultures**

| **Test organism** | **Culture** | **Origin** | **Incubation** |
|---|---|---|---|
| *Candida fermen* | CBS 6319 | Grape juice | Screw capped |
| *Candida parapsilosis* | CBS 1954 | Olives | Screw capped |
| *Candida parapsilosis* | CBS 2215 | Pickling | Screw capped |
| *Candida parapsilosis* | C-S | beverage | Screw capped |
| *Candida tropicalis* | MUCL 29893 | | Screw capped |
| *Candida tropicalis* | MUCL 28180 | | Screw capped |
| *Debaryomyces hansenii* | CBS 791 | Beef | Screw capped |
| *Debaryomyces hansenii* | CBS 5230 | Rice mash | Screw capped |
| *Debaryomyces hansenii* | MUCL 30003 | Cheese | Screw capped |
| *Dekkera bruxellensis* | MUCL 27706 | | Screw capped |
| *Dekkera bruxellensis* | MUCL 27707 | | Screw capped |
| *Hanseniaspora uvarum* | MUCL 31705 | | Screw capped |
| *Hanseniaspora uvarum* | MUCL 30628 | | Screw capped |
| *Hanseniaspora uvarum* | MUCL 30626 | | Screw capped |
| *Issatchenkia orientalis* | CBS 2050 | Ginger | Screw capped |
| *Issatchenkia orientalis* | CBS 5147 | Fruit juice | Screw capped |
| *Kluyveromyces marxianus* | MUCL 30063 | | Screw capped |
| *Kluyveromyces marxianus* | MUCL 30092 | | Screw capped |
| *Metschnokowia pulcherrima* | MUCL 29874 | | Screw capped |
| *Metschnokowia pulcherrima* | MUCL 31701 | | Screw capped |
| *Pichia anomala* | | | Screw capped |
| | CBS 1683 | Orangeade | Screw capped |
| | | | Screw capped |
| | | | |
| *Pichia anomala* | CBS 1979 | Sauerkraut | Screw capped |
| *Pichia anomala* | MUCL 27777 | | Screw capped |
| *Pichia membranifaciens* | MUCL 27794 | Elm tree | Shake flask |
| *Pichia membranifaciens* | CBS 8427 | Tomato | Shake flask |
| *Pichia membranifaciens* | CBS 5567 | Lemonade | Shake flask |
| *Pichia membranifaciens* | MUCL 30004 | Elm tree | Screw capped |
| *Rhodotorula glutinis* | CBS 2367 | Fruit juice | Shake flask |
| *Rhodotorula mucilaginosa* | CBS 8054 | Red pepper | Shake flask |
| *Rhodotorula mucilaginosa* | CBS 2401 | Malt syrup | Shake flask |
| *Saccharomyces cerevisiae* | MUCL 30115 | Distillery | Screw capped |
| *Saccharomyces cerevisiae* | CBS 6710 | Orange | Screw capped |
| *Saccharomyces cerevisiae* | CBS 2190 | Fruit juice | Screw capped |
| *Saccharomyces cerevisiae* | MUCL 30006 | Beer | Screw capped |
| *Saccharomyces cerevisiae* | C-S | Beverage | Screw capped |
| *Schizosaccharomyces pombe* | C-S | Beverage | Screw capped |
| *Torulospora delbruecki* | CBS 7443 | Lemonade | Screw capped |
| *Torulospora delbruecki* | CBS 705 | Souring | Screw capped |
| *Yarrowia lipolytica* | CBS 7033 | Soil | Screw capped |
| *Yarrowia lipolytica* | MUCL 29439 | Cheese | Screw capped |
| *Yarrowia lipolytica* | MUCL 29853 | Wet milling | Screw capped |
| *Zygosaccharomyces bailii* | CBS 6708 | Orange | Screw capped |
| *Zygosaccharomyces bailii* | MUCL 38486 | Gherkin | Screw capped |
| *Zygosaccharomyces bailii* | MUCL 28823 | Apple juice | Screw capped |
| *Zygosaccharomyces bailii* | MUCL 27812 | Fruit juice | Shake flask |
| *Zygosaccharomyces bailii* | MUCL 38950 | | Screw capped |
| *Zygosaccharomyces rouxii* | MUCL 43236 | | Screw capped |
| *Zygosaccharomyces rouxii* | MUCL 30008 | | Screw capped |
| *Zygosaccharomyces rouxii* | C-S | Beverage | Screw capped |

### Inhibition assays

### Determination of the Minimal Inhibitory Concentration (one dimensional screening).

The inhibition tests were carried out in sterile 96-well microtiter plates. Increasing amounts (0 to 100 µL in 10 steps of 10 µL) of a sterile stock solution of each compound were transferred to sterile microtiter plates. Next 100 µL of filter sterilized double strength GPY-broth was added and the volume of each well was adjusted to 200 µL with sterile demineralized-water. Plates were inoculated with 2 µL of two days old cultures and incubated for 96 hours at 25 oC. Growth was quantified by measuring the optical density at 595 nm in a microplate reader. All the experiments were carried out in duplicate. The Minimal Inhibitory Concentration (MIC) was taken to be the lowest concentration where the absorbance increase did not exceed the threshold value, which was defined as the average increase in absorbance value of the blanks plus three times the standard deviation.

### Screening of combinations of two inhibitors.

These combination tests were carried out in sterile 96-well microtiter plates. Sterile GPY-broth was prepared with increasing quantities of two different inhibitors. The concentrations of each inhibitor were presented in 8 equal concentration steps that ranged from 0 to 1 - 2 times the MIC value of a particular yeast for a particular inhibitor resulting in 64 different media. 200 ml of each medium was transferred to a panel of a sterile 96-well microtiter plate. Completed well plates were stored at 4°C until further use.
Plates were inoculated with 2 µL of two days old cultures and incubated for 96 hours at 25 °C. Growth was quantified by measuring the optical density at 595 nm in a microplate reader and expressed as a percentage of the growth in the control, which contained no inhibitor. All the experiments were carried out in duplicate.

### Screening of combinations of three ingredients.

These combination tests were also carried out in sterile 96-well microtiter plates. Sterile GPY-broth was prepared with increasing quantities of inhibitors. For the first dimension the concentrations of the first inhibitor was presented in 8 equal concentration steps. For the second dimension a fixed ratio of two other inhibitors was chosen. This mixture was presented in 8 equal concentration steps resulting in 64 different media. 200 ml of each medium was transferred to a panel of a sterile 96-well microtiter plate. Completed well plates were stored at 4 °C until further use. Plates were inoculated with 2 µL of two days old cultures and incubated for 96 hours at 25 °C. Growth was quantified by measuring the optical density at 595 nm in a microplate reader and expressed as a percentage of the growth in the control, which contained no inhibitor. All the experiments were carried out in duplicate.

### The tested preservative/antibacterial agents

Mono/di-octanoyl-glycerol, Mono/di-decanoyl-glycerol, MCE 8060® (i.e. a mixture of Mono/di-octanoyl-glycerol and Mono/di-decanoyl-glycerol), sodium octanoyllactate, sodium decanoyllactate and Pationic 122A® (a mixture of sodium sodium decanoyllactate and dodecanoyllactate) were purchased from Caravan ingredients. Lenexa, Kansas, USA). Sorbic acid and cinnamic acid were purchased from Sigma-Aldrich, St Louis, USA) and ε-polylysine from Chisso Corp (Japan)

### Results

Table 2a lists the MIC values of a number of yeasts for ε-polylysine at pH 3.5.

**Table 2a: Minimal Inhibitory Concentrations for ε-polylysine of various yeasts at pH 3.5**

| **Test organism** | **Culture** | **MIC(%)** |
|---|---|---|
| [minimum] | | 0 |
| [maximum] | | 0.03 |
| *Candida albicans* | DSM 1386 | 0.024 |
| *Candida albicans* | ATCC 2091 | > 0.03 |
| *Candida fermentati* | CBS 6319 | > 0.03 |
| *Candida parapsilosis* | CBS 1954 | 0.030 |
| *Candida parapsilosis* | CBS 2215 | > 0.03 |
| *Candida parapsilosis* | C-S | > 0.021 |
| *Candida tropicalis* | MUCL 29893 | 0.003 |
| *Candida tropicalis* | MUCL 28180 | 0.003 |
| *Debaryomyces hansenii* | CBS 791 | 0.003 |
| *Debaryomyces hansenii* | CBS 5230 | 0.006 |
| *Debaryomyces hansenii* | MUCL 30003 | 0.006 |
| *Dekkera bruxellensis* | MUCL 27706 | 0.006 |
| *Dekkera bruxellensis* | MUCL 27707 | 0.003 |
| *Hanseniaspora uvarum* | MUCL 31705 | 0.003 |
| *Hanseniaspora uvarum* | MUCL 30628 | 0.006 |
| *Hanseniaspora uvarum* | MUCL 30626 | 0.003 |
| *Issatchenkia orientalis* | CBS 2050 | 0.003 |
| *Issatchenkia orientalis* | CBS 5147 | 0.003 |
| *Kluyveromyces marxianus* | MUCL 30063 | 0.006 |
| *Kluyveromyces marxianus* | MUCL 30092 | 0.003 |
| *Metschnokowia pulcherrima* | MUCL 29874 | 0.015 |
| *Metschnokowia pulcherrima* | MUCL 31701 | 0.027 |
| *Pichia anomala* | | |
| | CBS 1683 | > 0.03 |
| | | |
| *Pichia anomala* | CBS 1979 | > 0.03 |
| *Pichia anomala* | MUCL 27777 | > 0.03 |
| *Pichia membranifaciens* | MUCL 27794 | ND |
| *Pichia membranifaciens* | CBS 8427 | ND |
| *Pichia membranifaciens* | CBS 5567 | ND |
| *Pichia membranifaciens* | MUCL 30004 | ND |
| *Rhodotorula glutinis* | CBS 2367 | ND |
| *Rhodotorula mucilaginosa* | CBS 8054 | ND |
| *Rhodotorula mucilaginosa* | CBS 2401 | ND |
| *Saccharomyces cerevisiae* | MUCL 30115 | ND |
| *Saccharomyces cerevisiae* | CBS 6710 | 0.003 |
| *Saccharomyces cerevisiae* | CBS 2190 | 0.003 |
| *Saccharomyces cerevisiae* | MUCL 30006 | 0.003 |
| *Saccharomyces cerevisiae* | C-S | 0.002 |
| *Schizosaccharomyces pombe* | C-S | 0.006 |
| *Torulospora delbruecki* | CBS 7443 | 0.003 |
| *Torulospora delbruecki* | CBS 705 | 0.003 |
| *Yarrowia lipolytica* | CBS 7033 | 0.018 |
| *Yarrowia lipolytica* | MUCL 29439 | 0.012 |
| *Yarrowia lipolytica* | MUCL 29853 | 0.006 |
| *Zygosaccharomyces bailii* | CBS 6708 | 0.006 |
| *Zygosaccharomyces bailii* | MUCL 38486 | 0.006 |
| *Zygosaccharomyces bailii* | MUCL 28823 | 0.003 |
| *Zygosaccharomyces bailii* | MUCL 27812 | 0.003 |
| *Zygosaccharomyces bailii* | MUCL 38950 | 0.003 |
| *Zygosaccharomyces rouxii* | MUCL 43236 | 0.003 |
| *Zygosaccharomyces rouxii* | MUCL 30008 | 0.003 |
| *Zygosaccharomyces rouxii* | C-S | 0.001 |

Table 2b provides a summary of the MIC values of a number of yeasts (such as e.g. the yeasts as shown in Table 1) for some medium chain fatty acid derivatives, sorbic acid, cinnamic acid and ε-polylysine at pH 3.5. The data show that derivatives of decanoic acid are more potent inhibitors than derivatives of octanoic acid. Cinnamic acid is also more effective than sorbic acid.

**Table 2b: Average Minimal Inhibitory Concentrations (MICavg), Maximum MIC (MICmax) of a collection of yeasts for C8 glyceride (mono/di-octanoyl glycerol), C10 glyceride (mono/di-decanoyl glycerol), MCE 8060®, C8 lactylate (sodium octanoyl lactate), C10 lactylate (sodium decanoyl lactate), Pationic 122A, polylysine, sorbic acid and cinnamic acid (at pH 3.5)**

| Compound | MIC_{avg} (% w/v) | MICₘₐₓ (% w/v) | MICₘₐₓ / MIC_{avg} |
|---|---|---|---|
| Mono/di-octanoyl glycerol | 0.100 ± 0.050 | 0.25 | 2.5 |
| Mon/di-decanoyl glycerol | 0.030 ± 0.020 | 0.08 | 2.7 |
| MCE 8060 | 0.020 ± 0.010 | 0.05 | 2.5 |
| Sodium octanoyl lactate | 0.070 ± 0.040 | 0.20 | 2.9 |
| Sodium decanoyl lactate | 0.010 ± 0.003 | 0.02 | 2.0 |
| Pationic 122 A | 0.020 ± 0.009 | 0.05 | 2.5 |
| Sorbic acid | 0.030 ± 0.020 | 0.07 | 2.5 |
| Cinnamic acid | 0.009 ± 0.007 | 0.03 | 3.0 |
| E-polylysine | 0.010 ± 0.010 | 0.04 | 4.0 |

### Binary and ternary combinations of preservative agents

The following Tables show the effects of ε-polylysine combined with various other preservative agents on different yeasts.

**Table 3: Outgrowth of Schizosaccharomyces pombe in GPY-broth at pH 3.5 at different concentrations of ε-polylysine and potassium sorbate. The outgrowth was expressed as a percentage of the outgrowth at zero concentration inhibitor which was set at 100 %.**

| | ε- polylysine (% w/v) | | | | | | | | |
|---|---|---|---|---|---|---|---|---|---|
| Potassium-sorbate (% w/v) | | 0 | 0.001 | 0.002 | 0.003 | 0.004 | 0.005 | 0.006 | 0.007 |
| | 0 | 100 | 98 | 97 | 97 | 95 | 95 | 88 | 35 |
| | 0.007 | 81 | 73 | 10 | 4 | 3 | 1 | 1 | 1 |
| | 0.014 | 69 | 15 | 2 | 1 | 0 | 2 | 2 | 0 |
| | 0.021 | 56 | 3 | 3 | 3 | 1 | 3 | 3 | 1 |
| | 0.028 | 44 | 1 | 0 | 0 | 0 | 1 | 0 | 1 |
| | 0.035 | 30 | 0 | 2 | 2 | 0 | 0 | 1 | 1 |
| | 0.042 | 20 | 1 | 0 | 2 | 1 | 0 | 2 | 3 |
| | 0.049 | 7 | 0 | 0 | 3 | 1 | 4 | 1 | 0 |

**Table 4: Outgrowth of Saccharomyces cerevisiae in GPY-broth at pH 3.5 at different concentrations of ε-polylysine and MCE 8060 (a mixture of Mono/di-octanoyl-glycerol and Mono/di-decanoyl-glycerol. The outgrowth was expressed as a percentage of the outgrowth at zero concentration inhibitor which was set at 100 %**

| | | ε- polylysine (% w/v) | | | | | | | |
|---|---|---|---|---|---|---|---|---|---|
| | | 0 | 0.0003 | 0.0006 | 0.0009 | 0.0012 | 0.0015 | 0.0018 | 0.0021 |
| MCE 8060 (% w/v) | 0 | 100 | 99 | 9 | 6 | 6 | 6 | 4 | 3 |
| | 0.003 | 88 | 14 | 5 | 3 | 2 | 4 | 2 | 2 |
| | 0.006 | 73 | 3 | 2 | 1 | 2 | 2 | 1 | 1 |
| | 0.009 | 32 | 2 | 1 | 2 | 0 | 0 | 0 | 0 |
| | 0.012 | 4 | 0 | 0 | 0 | 0 | 0 | 0 | 0 |
| | 0.015 | 2 | 1 | 1 | 1 | 1 | 0 | 0 | 0 |
| | 0.018 | 0 | 0 | 0 | 0 | 0 | 0 | 0 | 0 |
| | 0.021 | 0 | 0 | 0 | 1 | 0 | 0 | 0 | 0 |

**Table 5: Outgrowth of Torulaspora delbrueckii in GPY-broth at pH 3.5 at different concentrations of ε-polylysine and sodium decanoyllactate. The outgrowth was expressed as a percentage of the outgrowth at zero concentration inhibitor which was set at 100 %.**

| | | ε- polylysine (%w/v) | | | | | | | |
|---|---|---|---|---|---|---|---|---|---|
| C10 Lactylate (%w/v) | | 0 | 0.0003 | 0.0006 | 0.0009 | 0.0012 | 0.0015 | 0.0018 | 0.0021 |
| | 0 | 100 | 98 | 103 | 108 | 111 | 112 | 113 | 115 |
| | 0.0015 | 80 | 98 | 106 | 114 | 117 | 95 | 15 | 19 |
| | 0.003 | 76 | 4 | 3 | 2 | 1 | 0 | 0 | 2 |
| | 0.0045 | 23 | 0 | 1 | 0 | 1 | 2 | 0 | 2 |
| | 0.006 | 6 | 1 | 1 | 0 | 0 | 0 | 2 | 1 |
| | 0.0075 | 2 | 3 | 1 | 2 | 1 | 2 | 1 | 2 |
| | 0.009 | 3 | 2 | 0 | 0 | 2 | 2 | 1 | 1 |
| | 0.0105 | 2 | 1 | 3 | 1 | 2 | 0 | 0 | 0 |

**Table 6: Outgrowth of Saccharomyces cerevisiae in GPY-broth at pH 3.5 at different concentration of ε-polylysine, MCE 8060 (a mixture of Mono/di-octanoyl-glycerol and Mono/di-decanoyl-glycerol) and potassium sorbate. The outgrowth was expressed as a percentage of the outgrowth at zero concentration inhibitor which was set at 100 %. The sorbate-MCE 8060 ratio was set at 2.33**

| | | Potassium sorbate - MCE 8060 mixture (% w/v) | | | | | | | |
|---|---|---|---|---|---|---|---|---|---|
| | | 0 | 0.01 | 0.02 | 0.03 | 0.04 | 0.05 | 0.06 | 0.07 |
| ε-polylysine | 0 | 100 | 83 | 40 | 2 | 1 | 0 | 1 | 1 |
| | 0.0003 | 101 | 6 | 1 | 0 | 0 | 0 | 0 | 0 |
| | 0.0006 | 4 | 3 | 1 | 1 | 1 | 2 | 0 | 0 |
| | 0.0009 | 3 | 3 | 1 | 2 | 1 | 0 | 1 | 0 |
| | 0.0012 | 2 | 2 | 1 | 1 | 1 | 2 | 0 | 0 |
| | 0.0015 | 2 | 2 | 2 | 3 | 3 | 2 | 1 | 1 |
| | 0.0018 | 2 | 2 | 0 | 0 | 0 | 0 | 0 | 0 |
| | 0.0021 | 2 | 1 | 1 | 1 | 0 | 0 | 0 | 0 |

**Table 7: Outgrowth of Saccharomyces cerevisiae in GPY-broth at pH 3.5 at different concentrations of ε-polylysine, MCE 8060 (a mixture of Mono/di-octanoyl-glycerol and Mono/di-decanoyl-glycerol) and cinnamic acid. The outgrowth was expressed as a percentage of the outgrowth at zero concentration inhibitor, which was set at 100 %. The MCE 8060- ε-polylysine ratio was set at 18.9**

| | | MCE 8060-ε-polylysine mixture (%w/v) | | | | | | | |
|---|---|---|---|---|---|---|---|---|---|
| | | 0 | 0.00179 | 0.00358 | 0.00537 | 0.00716 | 0.00895 | 0.01074 | 0.01253 |
| Cinnamic acid (%w/v) | 0 | 100 | 96 | 100 | 95 | 33 | 0 | 1 | 0 |
| | 0.002 | 76 | 75 | 3 | 1 | 1 | 0 | 0 | 1 |
| | 0.004 | 44 | 18 | 6 | 5 | 0 | 4 | 0 | 0 |
| | 0.006 | 1 | 0 | 7 | 0 | 0 | 1 | 0 | 0 |
| | 0.008 | 0 | 1 | 0 | 0 | 0 | 0 | 0 | 0 |
| | 0.01 | 2 | 3 | 2 | 2 | 1 | 2 | 2 | 2 |
| | 0.012 | 1 | 0 | 0 | 1 | 0 | 0 | 1 | 0 |
| | 0.014 | 0 | 1 | 2 | 1 | 0 | 0 | 0 | 0 |

### Experiment 2: Carbonated fruit juice

In this experiment the method for preservation according to the present invention is applied to carbonated fruit juice using various antimicrobial formulations. The antimicrobial activity of these formulations is measured by means of a plate count in samples of the fruit juice taken at different moments in time.

The fruit juice used contained water, about 10 to 15 wt% sweetener, about 1 wt% of a fruit juice concentrate, about 0.3 wt% of flavor and some citric acid and citrate. The initial pH was about 3.15.
The fruit juice was carbonized resulting in a CO2-concentration of about 5.2 g/l.

Fruit juice samples were inoculated with a mixed culture of 4 different yeasts (Candida parapsilosis, Schizosaccharomyces pombe, Zygosaccharomyces bailii and Saccharomyces cerevisiae), whereby the inoculum-level was approximately 100 cells or spores per ml.
The yeasts were pre-cultured on sterile GPY pH 3.5 (glucose peptone yeast powder having pH 3.5). The medium was incubated at 25°C for 24 hour. Prior to inoculation the number of cells was counted using a haemocytometer (type Bürker-Türk).

Different antimicrobial formulations were used. The formulations contain benzoic acid sodium salt (99+% from Acros), potassium sorbate (99% from Acros), potassium cinnamate, sodium hexametaphosphate (hereinafter referred to as "SHMP"), ε-polylysine (25 wt% from Chisso) and MCE 8060® (Caravan Ingredients). These components were also used in experiment 3 directed to the non-carbonated ice-tea described hereinafter.
MCE8060® is a commercial product from Caravan ingredients containing a mixture of mono/di-octanoyl-glycerol and mono/di-decanoyl-glycerol whereby the total of monoglycerides is minimally 58 %.
Table 8 provides the compositions of the antimicrobial formulations used in the fruit juice samples.

**Table 8: Compositions of the antimicrobial formulations used in the preservation method according to the present invention in carbonated fruit juice**

| **Sample** | **sodium benzoate wt%** | **potassium sorbate wt%** | **potassium cinnamate wt%** | **ε-Polylysine (at 100%) wt%** | **MCE 8060 wt%** | **SHMP wt%** |
|---|---|---|---|---|---|---|
| Control 2+ | 0.0277 | 0.0225 | | | | 0.0009 |
| Control - | | | | | | |
| 1 | | 0.0225 | | 0.003 | 0.015 | 0.0009 |
| 1a | | 0.0225 | | 0.00225 | 0.01125 | 0.0009 |
| 3 | | | | 0.004 | 0.02 | 0.0009 |
| 4 | | | 0.015 | 0.003 | 0.015 | 0.0009 |
| 4a | | | 0.01125 | 0.00225 | 0.01125 | 0.0009 |

The ε-polylysine commercially available is a solution containing 25wt% of ε-polylysine.
The ε-polylysine content in the above table is at 100 wt%.

Table 9 presents the results of a plate count in samples of the fruit juice taken at different moments in time.

**Table 9: Total plate count (log CFU/ml) of yeasts in fruit juice samples at different moments in time**

| Log CFU/ml | Time (days) | | | | | | | | |
|---|---|---|---|---|---|---|---|---|---|
| Sample | 0 | 7 | 15 | 28 | 42 | 56 | 70 | 84 | 98 |
| Control 2+ | 2.50 | 2.28 | 4.00 | 6.21 | 5.69 | 5.17 | 3.23 | 2.77 | 1.72 |
| Control - | 2.52 | 5.59 | 6.68 | 6.45 | 6.18 | 6.12 | 5.69 | 5.77 | 5.95 |
| 1 | 2.59 | <0.5 | <0.5 | <0.5 | <0.5 | <0.5 | <0.5 | <0.5 | <0.5 |
| 1a | 2.59 | <0.5 | <0.5 | <0.5 | <0.5 | <0.5 | <0.5 | <0.5 | <0.5 |
| 3 | 2.59 | 0.65 | <0.5 | <0.5 | <0.5 | <0.5 | <0.5 | <0.5 | <0.5 |
| 4 | 2.33 | <0.5 | <0.5 | <0.5 | <0.5 | <0.5 | <0.5 | <0.5 | <0.5 |
| 4a | 2.16 | 1.54 | <0.5 | <0.5 | <0.5 | <0.5 | <0.5 | <0.5 | <0.5 |

The results in above Table show that the method for preservation of acidic beverages according to the present invention is very suited for preserving acidic carbonated fruit-juices. A mixture of ε-polylysine and C8/C10 glycerides (sample 3) is capable of preserving such a fruit juice for at least 98 days which has not been demonstrated before. The other samples demonstrate by the count taken after 7 days that by addition of further preservatives the antimicrobial effect of the polylysine/glyceride combination as used in the method according to the present invention is even better and that the concentrations of all preservatives used may be lowered while the same preservative results are obtained.

Similar results were obtained when the glyceride was replaced with sodium octanoyllactate or sodium decanoyllactate or Pationic 122A® (a commercially available mixture of sodium sodium decanoyllactate and dodecanoyllactate from Caravan ingredients) or when a mixture of glyceride with one of above-mentioned lactylates was used.

### Experiment 3: Non-carbonated ice-tea

In this experiment the method for preservation according to the present invention is applied to ice-tea using various antimicrobial formulations. The antimicrobial activity of these formulations is measured by means of a plate count in samples of the ice-tea taken at different moments in time.

A standard formulation for ice-tea was made having an initial pH of about 2.65. Non-carbonated ice tea samples were inoculated with a mixed culture of 4 different yeasts (Candida parapsilosis, Schizosaccharomyces pombe, Zygosaccharomyces bailii and Saccharomyces cerevisiae) or with a mix of zygo- or conidiospores of three different spoilage molds (Mucor plumbeus, Paecilomyces variotii and a Penicillium sp.). In all cases the inoculum-level was approximately 100 cells c.q. spores per ml.

Molds were pre-cultured on malt extract agar. The medium was incubated at 25°C for 7 days. Conidiospores of molds were collected by flooding and scraping fully own agar plates with 5 -10 ml 0.05 % (w/v) Tween 80. The liquid containing the conidiospores was then transferred to a sterile 50 ml test tube containing 10 - 20 sterile glass beads (5 mm diameter). The content of the tube was briefly stirred with a vortex to loosen the spores. The content of the tube was subsequently transferred to a sterile syringe with a plug of glass wool at the bottom. Any remaining mycelium was removed by filtration.
Prior to inoculation the number of cells or conidiospores was counted using a haemocytometer (type Bürker-Türk).

Different antimicrobial formulations were used. The formulations contained the same components as mentioned in Experiment 2.

Table 10 provides the compositions of the antimicrobial formulations used in the non-carbonated ice-tea samples.

**Table 10: Compositions of the antimicrobial formulations used in the preservation method according to the present invention in non-carbonated ice-tea**

| **Sample** | **sodium benzoate wt%** | **potassium sorbate wt%** | **Potassium cinnamate wt%** | **ε-Polylysine (at 100%) wt%** | **MCE 8060 wt%** | **SHMP wt%** |
|---|---|---|---|---|---|---|
| Control - | | | | | | |
| 1 | | 0.023 | | 0.003 | 0.015 | 0.08 |
| 3 | | | | 0.004 | 0.02 | 0.08 |
| 4 | | | 0.015 | 0.003 | 0.015 | 0.08 |

The ε-polylysine commercially available is a solution containing 25wt% of ε-polylysine.
The ε-polylysine content in the above table is at 100 wt%.

Table 11 and 12 present the results of a plate count in samples of the ice-tea taken at different moments in time.

**Table 11: Total plate count (log CFU/ml) of molds in ice-tea samples at different moments in time**

| Log CFU/ml | Time (days) | | | | |
|---|---|---|---|---|---|
| Sample | 0 | 7 | 20 | 34 | 62 |
| Control - | 2.97 | 2.88 | 5.57 | 4.98 | 4.85 |
| 1 | 2.53 | 1.83 | 1.00 | <1 | <1 |
| 3 | 2.75 | 1.84 | 2.08 | 2.51 | 3.03 |
| 4 | 2.63 | 1.51 | 2.05 | 2.05 | 1.31 |

The results in above Table show that the method for preservation of acidic beverages according to the present invention is very suited for preserving acidic non-carbonated ice-tea drinks containing molds. A mixture of ε-polylysine and C8/C10 glycerides (sample 3) has an inhibiting effect on the growth of molds and become significantly more effective when a third preservative such as potassium cinnamate or potassium sorbate is added.

**Table 12: Total plate count (log CFU/ml) of yeasts in ice-tea samples at different moments in time**

| Log CFU/ml | Time (days) | | | | |
|---|---|---|---|---|---|
| Sample | 0 | 7 | 20 | 34 | 62 |
| Control - | 2.64 | 2.15 | 2.54 | 1.90 | 0.97 |
| 1 | 1.94 | <0.5 | <0.5 | <0.5 | <0.5 |
| 3 | 1.67 | <0.5 | <0.5 | <0.5 | <0.5 |
| 4 | 1.09 | <0.5 | <0.5 | <0.5 | <0.5 |

The results in above Table show that the method for preservation of acidic beverages according to the present invention is very suited for preserving acidic non-carbonated drinks such as ice-tea. A mixture of ε-polylysine and C8/C10 glycerides (sample 3) is capable of preserving such a drink for at least 62 days which has not been demonstrated before.
The other samples demonstrate that by addition of further preservatives the anitmicrobial effect of the polylysine/glyceride combination as used in the method according to the present invention remains the same although lower concentrations of preservatives have been used.

Similar results w.r.t. the antimicrobial effect against molds and yeasts in non-carbonated ice-tea were obtained when the glyceride was replaced with sodium octanoyllactate or sodium decanoyllactate or Pationic 122A® (a commercially available mixture of sodium sodium decanoyllactate and dodecanoyllactate from Caravan ingredients) or when a mixture of glyceride with one of above-mentioned lactylates was used.

## Claims

1. Method for preserving an acidic beverage having a pH value of from 1 to 4.8 comprising application of a composition comprising polylysine and/or a salt hereof and as second preservative at least one of fatty acid ester of hydroxycarboxylic acid and/or a salt hereof, or of fatty acid ester of glycerol.

2. Method according to claim 1 wherein the beverage has a pH value of from 2 to 4.6

3. Method according to claim 1 or 2 wherein the beverage undergoes a cold-fill packing method.

4. Method according to any one of the preceding claims wherein said fatty acid ester of hydroxycarboxylic acid comprises lactylate.

5. Method according to any one of the preceding claims wherein said composition comprises a further preservative agent.

6. Method according to claim 5 wherein said further preservative agent is one or more components selected from sorbic acid and its salt, cinnamic acid and its salt, lactic acid and its salt, acetic acid and its salt, citric acid and its salt, and propionic acid and its salt.

7. Method according to anyone of the previous claims wherein polylysine is ε-polylysine.

8. Method according to anyone of the previous claims wherein the composition comprises from 0.0001 wt% to up to 50 wt% of polylysine and/or a salt thereof and either from 0.0001 wt% to up to 45wt.% of glyceride or from 0.0001 wt% up to 45 wt% of lactylate, and further from 0 to 45 wt% of organic acid or a salt or ester of mixture hereof, from 0 to 45 wt% of cinnamic acid or a salt hereof and from 0 to 45 wt% of sorbic acid or a salt hereof.

9. Method according to claim 8 wherein the organic acid comprises lactic acid, acetic acid, citric acid, propionic acid or any combination hereof.

10. Method according to anyone of the previous claims wherein said composition is applied against yeasts, fungi or bacteria.

11. Method according to the previous claim wherein said fungi comprises fungi from the family of Fusarium, Mucor, Byssochlamys, Neosartorya, Talaromyces, Geotrichum, Paecilomyces, Penicillium, Aspergillus, Botrytis, Rhizopus, Cladosporium and Eurotium.

12. Method according to claim 10 wherein said yeast comprises yeasts from the family of Candida, Debaryomyces, Dekkera, Hanseniaspora, Issatchenkia, Kluyveromyces, Metschnokowia, Pichia, Rhodotorula, Saccharomyces, Schizosaccharomyces, Torulospora, Yarrowia and of the family of Zygosaccharomyces.

13. Acidic drink product having a pH value of from 1 to 4.8 comprising polylysine and a second preservative selected from either lactylate or glyceride or both and a third preservative selected from sorbic acid, cinnamic acid, lactic acid, acetic acid, citric acid and/or propionic acid, any salts of these acids and any combination hereof.

14. Use of fatty acid ester of glycerol as antimicrobial agent in a composition comprising polylysine and/or a salt hereof for the preservation of acidic drink products having a pH of from 1 to 4.8.

15. Use of fatty acid ester of fatty acid and hydroxycarboxylic acid in its acid-, salt- or ester-form as antimicrobial agent in a composition comprising polylysine and/or a salt hereof for the preservation of acidic drink products having a pH of from 1 to 4.8

## Patentansprüche

1. Verfahren zur Konservierung eines säurehaltigen Getränks mit einem pH-Wert von 1 bis 4,8, umfassend die Anwendung einer Zusammensetzung, die Polylysin und/oder ein Salz davon und als zweiten Konservierungsstoff mindestens einen Hydroxycarbonsäure-Fettsäureester und/oder ein Salz davon, oder einen Fettsäureester von Glyzerin umfasst.

2. Verfahren gemäß Anspruch 1, wobei das Getränk einen pH-Wert von 2 bis 4,6 aufweist.

3. Verfahren gemäß Anspruch 1 oder 2, wobei das Getränk einem Kalt-Abfüllungsverfahren unterzogen wird.

4. Verfahren gemäß einem der vorangehenden Ansprüche, wobei der Hydroxycarbonsäure-Fettsäureester Lactylat umfasst.

5. Verfahren gemäß einem der vorangehenden Ansprüche, wobei die Zusammensetzung ein weiteres Konservierungsmittel umfasst.

6. Verfahren gemäß Anspruch 5, wobei das weitere Konservierungsmittel ein oder mehrere Bestandteile, ausgewählt aus Sorbinsäure und ihrem Salz, Zimtsäure und ihrem Salz, Milchsäure und ihrem Salz, Essigsäure und ihrem Salz, Zitronensäure und ihrem Salz und Propionsäure und ihrem Salz, ist.

7. Verfahren gemäß einem der vorangehenden Ansprüche, wobei das Polylysin ε-Polylysin ist.

8. Verfahren gemäß einem der vorangehenden Ansprüche, wobei die Zusammensetzung 0,0001 Gew.-% bis zu 50 Gew.-% an Polylysin und/oder einem Salz davon und entweder 0,0001 Gew.-% bis zu 45 Gew.-% an Glycerid oder 0,0001 Gew.-% bis zu 45 Gew.-% an Lactylat und außerdem 0 bis 45 Gew.-% an organischer Säure oder einem Salz oder Ester oder einer Mischung davon, 0 bis 45 Gew.-% an Zimtsäure oder einem Salz davon und 0 bis 45 Gew.-% an Sorbinsäure oder einem Salz davon umfasst.

9. Verfahren gemäß Anspruch 8, wobei die organische Säure Milchsäure, Essigsäure, Zitronensäure, Propionsäure oder eine Kombination davon umfasst.

10. Verfahren gemäß einem der vorangehenden Ansprüche, wobei die Zusammensetzung gegen Hefen, Pilze oder Bakterien eingesetzt wird.

11. Verfahren gemäß dem vorangehenden Anspruch, wobei die Pilze Pilze aus den Familien Fusarium, Mucor, Byssochlamys, Neosartorya, Talaromyces, Geotrichum, Paecilomyces, Penicillium, Aspergillus, Botrytis, Rhizopus, Cladosporium und Eurotium umfassen.

12. Verfahren gemäß Anspruch 10, wobei die Hefen Hefen aus den Familien Candida, Debaryomyces, Dekkera, Hanseniaspora, Issatchenkia, Kluyveromyces, Metschnokowia, Pichia, Rhodotorula, Saccharomyces, Schizosaccharomyces, Torulospora, Yarrowia und der Familie Zygosaccharomyces umfassen.

13. Säurehaltiges Getränkeprodukt mit einem pH-Wert von 1 bis 4,8, umfassend Polylysin und einen zweiten Konservierungsstoff, ausgewählt aus entweder Lactylat oder Glycerid oder beiden, und einen dritten Konservierungsstoff, ausgewählt aus Sorbinsäure, Zimtsäure, Milchsäure, Essigsäure, Zitronensäure und/oder Propionsäure, jedem Salz dieser Säuren und jeder Kombination davon.

14. Verwendung eines Fettsäureesters von Glycerin als antimikrobielles Mittel in einer Zusammensetzung, umfassend Polylysin und/oder ein Salz davon, für die Konservierung säurehaltiger Getränkeprodukte mit einem pH-Wert von 1 bis 4,8.

15. Verwendung eines Fettsäureesters aus Fettsäure und Hydroxycarbonsäure in seiner Säure-, Salz- oder Esterform als antimikrobielles Mittel in einer Zusammensetzung, umfassend Polylysin und/oder ein Salz davon, für die Konservierung säurehaltige Getränkeprodukte mit einem pH-Wert von 1 bis 4,8.

## Revendications

1. Procédé de conservation d'une boisson acide ayant une valeur de pH de 1 à 4,8 comprenant l'application d'une composition comprenant une polylysine et/ou un sel de celle-ci et à titre de second conservateur, au moins un ester d'acide gras d'acide hydroxycarboxylique et/ou un sel de celui-ci, ou un ester d'acide gras de glycérol.

2. Procédé selon la revendication 1, dans lequel la boisson a une valeur de pH de 2 à 4, 6.

3. Procédé selon les revendications 1 ou 2, dans lequel la boisson est soumise à un procédé de conditionnement par remplissage à froid.

4. Procédé selon l'une quelconque des revendications précédentes, dans lequel ledit ester d'acide gras d'acide hydroxycarboxlique comprend un lactylate.

5. Procédé selon l'une quelconque des revendications précédentes, dans lequel ladite composition comprend un autre agent conservateur.

6. Procédé selon la revendication 5, dans lequel ledit autre agent conservateur est un ou plusieurs composants choisis parmi l'acide sorbique et son sel, l'acide cinnamique et son sel, l'acide lactique et son sel, l'acide acétique et son sel, l'acide citrique et son sel, et l'acide propionique et son sel.

7. Procédé selon l'une quelconque des revendications précédentes, dans lequel ladite polylysine est une ε-polylysine.

8. Procédé selon l'une quelconque des revendications précédentes, dans lequel la composition comprend de 0,0001 jusqu'à 50 % en poids de polylysine et/ou d'un sel de celle-ci et soit de 0,0001 jusqu'à 45 % en poids de glycéride, soit de 0,0001 jusqu'à 45 % en poids de lactylate, et en outre, de 0 à 45 % en poids d'un acide organique ou d'un sel ou ester ou mélange de ceux-ci, de 0 à 45 % en poids d'acide cinnamique et d'un sel de celui-ci et de 0 à 45 % en poids d'acide sorbique ou d'un sel de celui-ci.

9. Procédé selon la revendication 8, dans lequel l'acide organique comprend l'acide lactique, l'acide acétique, l'acide citrique, l'acide propionique ou une combinaison quelconque de ceux-ci.

10. Procédé selon l'une quelconque des revendications précédentes, dans lequel ladite composition est appliquée contre les levures, les champignons ou les bactéries.

11. Procédé selon la revendication précédente, dans lequel lesdits champignons comprennent les champignons provenant de la famille de Fusarium, Mucor, Byssochlamys, Neosartorya, Talaromyces, Geotrichum, Paecilomyces, Penicillium, Aspergillus, Botrytis, Rhizopus, Cladosporium et Eurotium.

12. Procédé selon la revendication 10, dans lequel ladite levure comprend les levures provenant de la famille de Candida, Debaryomyces, Dekkera, Hanseniaspora, Issatchenkia, Kluyveromyces, Metschnokowia, Pichia, Rhodotorula, Saccharomyces, Schizosaccharomyces, Torulospora, Yarrowia et de la famille de Zygosaccharomyces.

13. Produit du type boisson acide ayant une valeur de pH de 1 à 4,8 comprenant une polylysine et un deuxième conservateur choisi parmi soit un lactylate, soit un glycéride, ou les deux, et un troisième conservateur choisi parmi l'acide sorbique, l'acide cinnamique, l'acide lactique, l'acide ascétique, l'acide citrique et/ou l'acide propionique, et les sels et combinaisons quelconques de ces acides.

14. Utilisation d'un ester d'acide gras de glycérol à titre d'agent antimicrobien dans une composition comprenant une polylysine et/ou un sel de celle-ci pour conserver des produits de type boisson acide ayant un pH de 1 à 4, 8.

15. Utilisation d'un ester d'acide gras d'acide hydroxycarboxylique sous sa forme acide, sel ou ester à titre d'agent antimicrobien dans une composition comprenant une polylysine et/ou un sel de celle-ci pour conserver des produits de type boisson acide ayant un pH de 1 à 4, 8.
